# EUROPÄISCHE PATENTSCHRIFT

(11) **EP 1 517 485 B1**
(45) Veröffentlichungstag und Bekanntmachung des Hinweises auf die Patenterteilung: **12.12.2007**
(21) Anmeldenummer: 04017286.8
(22) Anmeldetag: 22.07.2004
(51) Int. Cl.: H04L 12/56

(54) **Vorrichtung zum Empfang, der Anpassung der Rahmengeschwindigkeit und zur Verteilung codierter digitaler Audio- und Datensignale**
Device for the reception, the adaption of the frame rate and the distribution of coded digital audio and data signals
Dispositif pour la réception, l'adaption de la fréquence de trames et de la distribution de signaux audio codés et de signaux de données digitaux

(30) Priorität: 12.08.2003 DE 10337321
(43) Veröffentlichungstag der Anmeldung: 23.03.2005
(73) Patentinhaber: ROBERT BOSCH GMBH, 70442 Stuttgart (DE)
(72) Erfinder: Spreitz, Gerald, 30880 Laatzen (DE); Jakoblew, Sascha, 31141 Hildesheim (DE)

(56) Entgegenhaltungen:
- EP-A- 0 982 900
- EP-A- 1 006 751
- DE-A- 10 138 121
- US-A- 5 247 518
- US-A- 5 604 867
- US-A- 5 617 419
- US-A- 6 078 592
- TAPPE R ET AL: "MOST-MEDIA ORIENTED SYSTEMS TRANSPORT" ELEKTRONIK, FRANZIS VERLAG GMBH. MUNCHEN, DE, Bd. 49, Nr. 14, 11. Juli 2000 (2000-07-11), Seiten 54-59, XP001004842 ISSN: 0013-5658

## Beschreibung

Es wird eine Vorrichtung zur Verteilung codierter und/oder komprimierter, digitaler Audio- und Datensignale an mehrere Endgeräte, insbesondere in einem Kraftfahrzeug, beschrieben, wobei Empfangsmittel vorgesehen sind, mit denen die codierten Signale in ersten Rahmen, mit einer ersten Rahmengeschwindigkeit empfangen werden, Mittel zur Anpassung an eine zweite Rahmengeschwindigkeit vorgesehen sind und Verteilmittel vorgesehen sind, mittels denen die codierten Audiodaten in zweiten Rahmen, mit einer zweiten Rahmengeschwindigkeit, an die Endgeräte verteilt werden und die Endgeräte Mittel zur Codierung der Audio- und Datensignale aufweisen. Dies kann mittels eines Schieberegisters vorgenommen werden, in das die Daten des ersten Rahmens eingeschrieben werden, wobei ein Teil der Daten aus dem Schieberegister in einen FIFO-Speicher übernommen werden, und taktgleich mit dem Takt des Verteilmittels der Inhalt des FIFO-Speichers in die zweiten Rahmen übernommen werden und auf das Verteilmittel ausgegeben werden.

### Stand der Technik

Aus der DE 101 38 121 A1 ist ein elektronisches System und Verfahren zum Adressieren von Geräten bekannt, das ein erstes Bussystem, basierend auf statischen Adressen aufweist, ein zweites Bussystem mit bei einer Initialisierung dynamisch vergebenen Adressen aufweist, eine dem zweiten Bussystem zugeordnete statische Adresse aufzeigt sowie Mittel zur Transformation einer dynamischen Adresse in eine quasistatische Adresse beinhaltet, wobei die quasistatische Adresse die dem zweiten Bussystem zugeordnete statische Adresse beinhaltet.

Aus der EP 1 006 751 A2 ist ein Verfahren und eine Vorrichtung zur Flusssteuerung von rahmenbasierten Datenkommunikationsdaten bekannt, die über ein synchrones digitales Netzwerk und insbesondere, jedoch nicht ausschließlich auf die Steuerung der Flussrate von rahmenbasierten IEEE 802.3-Datenkommunikationsdaten über ein synchron digital Hierarchie-Netzwerk übertragen werden. Hierbei soll eine hohe Datenrate bereitgestellt werden, die sich durch eine hohe Zuverlässigkeit und Funktionalität auszeichnet, die bei üblichen lokalen Netzwerken verfügbar ist und auf ein Weitverkehrsnetzwerk, das ein eine hohe Kapazität aufweisendes synchrones Langstrecken-Digitalnetzwerk umfasst. Weiterhin sollen angepasste Datenraten zwischen üblichen Datenkommunikationssystemen und üblichen Telekommunikationssystemen in einer wirkungsvollen Weise bereitgestellt werden. Weiterhin hat die erfindungsgemäße Vorrichtung und das dazugehörige Verfahren die Aufgabe sicherzustellen, dass von einer rahmenbasierten Datenkanalschnittstelle an ein synchron digitales Netzwerk ausgesandte Daten nicht verloren gehen und zuverlässiger und effizienter Weise in ein System von virtuellen Containern eingefügt werden. Aus der US 5,617,419 ist ein Kommunikationsnetzwerk bekannt, das aus Knoten und Verbindungen besteht, über die unterschiedliche Arten von Datenrahmen übertragen werden, je nachdem welches Übertragungsprotokoll wie beispielsweise Token Ring, Ethernet, FDDI oder ATM, verwendet wird. Dabei wird von Übertragungsadaptern der Datenrahmentyp erkannt und entsprechend so angepasst, dass eine Übertragung über das Netzwerk ermöglicht wird. Aus der US 6,078,592 ist ein DAB-Empfänger zum Empfang eines digitalen Audio Rundfunksignals (DAB) bekannt, der Mittel zum Dekodieren eines empfangenen DAB-Signals aufweist, indem das Signal in eine erste Folge von Daten, organisiert in Frames eines ersten Typs dekodiert wird, wobei die genannten Frames an vorbestimmten Stellen innerhalb des Frames eine Anzahl Datentypen aufweisen.

### Kern und Vorteile der Erfindung

Der Kern der vorliegenden Erfindung ist es, eine Vorrichtung zur Verteilung codierter und/oder komprimierter, digitaler Audio- und Datensignale an mehrer Endgeräte, insbesondere zum Einsatz in einem Kraftfahrzeug, bereitzustellen, wobei über ein zweites Verteilmittel, das mehrere Endgeräte miteinander verbindet, die codierten und komprimierten Audio- und Datensignale bis an das Endgerät übertragen werden. Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafterweise ist das Mittel zur Decodierung für die Audiosignale als DAB-Quellendecoder und die Mittel zur Decodierung der Datensignale als Datendecoder ausgebildet. Weiterhin ist es vorteilhaft, dass die codierten und /oder komprimierten, digitalen Signale ein DAB-Ensemble sind, die mittels eines digitalen Rundfunksystems übertragen wurden.

Vorteilhafterweise ist die erste Rahmengeschwindigkeit größer als die zweite Rahmengeschwindigkeit.

Vorteilhafterweise ist das Verteilmittel ein Multimediabus. Der Multimediabus kann weiterhin als Kommunikationssystem nach einem der Standards IEEE-1394, USB, ISDN, CAN, D2Boptical, Hiperlan, Ethernet/IEEE 802.3, MOST oder Bluetooth ausgebildet sein.

Weiterhin ist es vorteilhaft, dass der Multimediabus eine Ring-Topologie aufweist und aus einem oder mehreren Datenverteilringen besteht.

Besonders vorteilhaft ist es, dass der Multimediabus als ein optisches Übertragungssystem ausgebildet ist, und aus Glasfaser- oder Plastikfaserleitungen besteht.

Vorteilhafterweise weist jedes Endgerät, das an das Verteilmittel angeschlossen ist, die Mittel zur Decodierung auf.

Vorteilhafterweise sind die Mittel zur Decodierung DAB-Quellendecoder und/oder Datendecoder.

Weiterhin ist es vorteilhaft, dass das Mittel zur Anpassung an eine zweite Rahmengeschwindigkeit ein Schieberegister ist, in das die Daten des ersten Rahmens eingeschrieben werden, dass ein FIFO-Speicher vorgesehen ist, in den ein Teil der Daten aus dem Schieberegister eingeschrieben werden und dass taktgleich mit dem Takt des Verteilmittels der Inhalt des FIFO-Speichers in die zweiten Rahmen übernommen wird und auf das Verteilmittel ausgegeben wird.

Besonders vorteilhaft ist, dass Nullrahmen, die als erste Rahmen ankommen können, in das Schieberegister geladen werden, jedoch nicht in den FIFO-Speicher übernommen werden und damit auch nicht über das Verteilmittel an die Endgeräte verteilt werden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausführungsbeispiele der Erfindung anhand von Zeichnungen erläutert. Es zeigen
- Figur 1: ein schematisiertes Blockschaltbild eine Ausführungsform der erfindungsgemäßen Vorrichtung und
- Figur 2: ein konkretes Ausführungsbeispiel der Vorrichtung zur Anpassung der ersten Rahmengeschwindigkeit an eine zweite Rahmengeschwindigkeit, deren Ausgangssignale an die Verteilmittel weitergegeben werden.

### Beschreibung von Ausführungsbeispielen

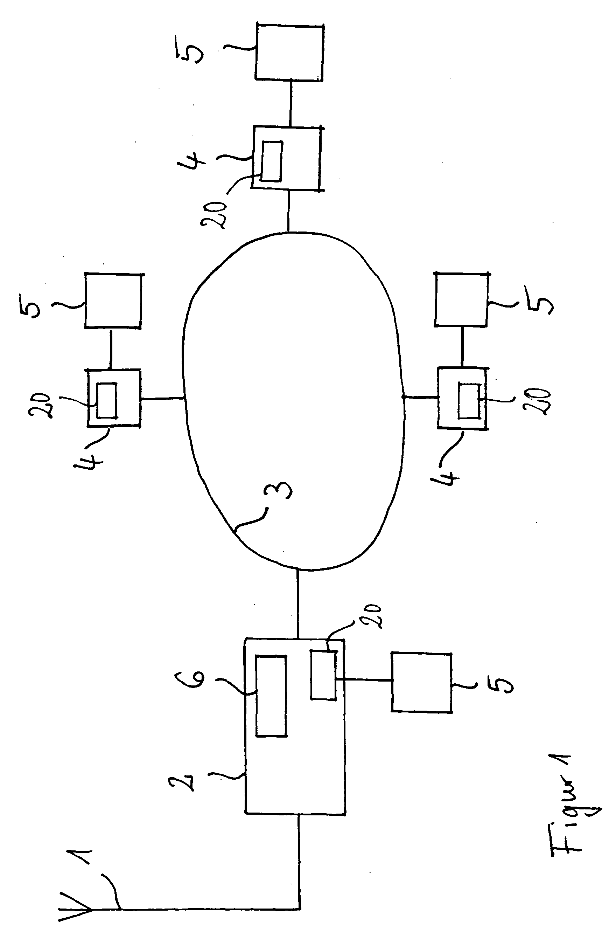

In Figur 1 ist eine Empfangsantenne 1 zu erkennen, die beispielsweise digitale Rundfunksignale empfangen kann, beispielsweise codierte, komprimierte DAB-Signale oder DRM-Signale. Diese Signale werden einer Empfangseinrichtung 2 zugeführt. Es ist bekannt, in diesem Empfangsmittel 2 die digitalen Signale zu decodieren und in analoge Signale umgesetzten Programme mittels eines zweiten Bussystems an Wiedergabeeinrichtungen weiterzuverteilen. Das Empfangsmittel 2 führt lediglich eine Demodulation der Signale durch und setzt diese, in ersten Rahmen empfangenen Signale in ein zweites Rahmenformat um und verteilt die nach wie vor codierten und komprimierten, digitalen Audio- und Datensignale an eine Verteileinrichtung 3 weiter. Diese Verteileinrichtung kann beispielsweise als ringförmiger Multimediabus mittels Glasfaser- oder Plastikfaserleitungen realisiert sein. An diesen Verteilring 3 sind mehrere Endgeräte 4 angeschlossen, die die codierten und komprimierten, digitalen Audio- und Datensignale decodieren und dekomprimieren und an Ausgabeeinrichtungen 5 weitergeben. Diese Ausgabevorrichtungen 5 können beispielsweise Lautsprecher, Bildschirme, Anzeigeeinrichtungen oder weiterverarbeitende Geräte sein. Die Endgeräte 4 weisen hierbei die nötigen Quellendecoder bzw. Datendecoder 20 auf, mittels denen die empfangenen, komprimierten und codierten digitalen Signale für die Ausgabevorrichtungen 5 aufbereitet werden können und beispielsweise als DAB-Quellendecoder und/oder Datendekoder ausgebildet sein können. Hierdurch ist es möglich, ein komplettes DAB-Ensemble zu empfangen und komplett auf ein Verteilring 3 zu geben, so dass die Benutzer der Endgeräte 4 jeweils separat entscheiden können, welches Programm des übertragenen DAB-Ensembles sie momentan hören möchten bzw. welche Zusatzdaten zur Wiedergabe gebracht werden sollen. Das Empfangsmittel 2 kann hierbei ebenfalls eine Ausgabevorrichtung 5 aufweisen, über die mittels eines Quellen- und/oder Datendecoders decodierte und dekomprimierte Informationen dem Benutzer zugeführt wird. Weiterhin kann es vorgesehen sein, dass die Empfangseinrichtung 2 weiterhin eine Bedieneinrichtung 6 aufweist, mittels der das gesamte Empfangs- und Verteilsystem gesteuert und bedient werden kann.

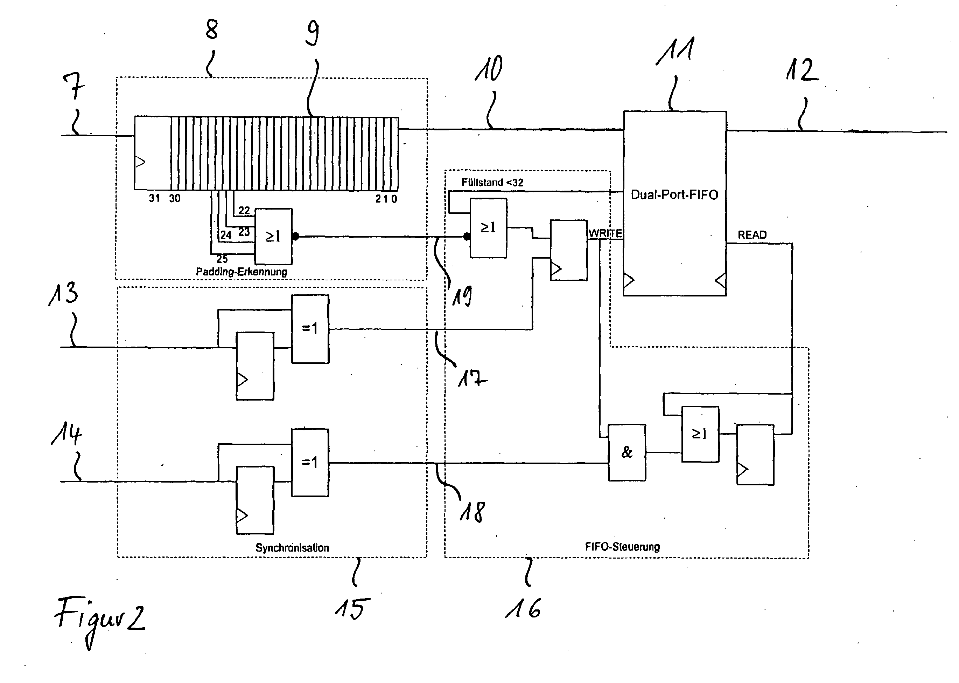

In Figur 2 ist eine detaillierte Ausführungsform dargestellt, mittels der die Empfangsdaten, die in ersten Rahmen vorliegen, in zweite Rahmen ungesetzt werden und über das Verteilmittel 3 weiterverteilt werden. Die codierten, komprimierten und digitalen Audio- und Datensignale, die beispielsweise DAB-Signale oder DRM-Signale sein können, kommen auf Leitung 7 an und werden der Padding-Erkennung 8 zugeführt. In der Padding-Erkennung 8 werden die ankommenden Daten der Leitung 7 in ein Schieberegister 9 eingeschrieben. Die Größe des Schieberegisters kann hierbei von unterschiedlicher Größe sein, je nach dem welches Datenformat die auf der Leitung 7 ankommenden Daten aufweisen. Im Fall von DAB-Daten, die mit einer Rahmengeschwindigkeit von 48000 Rahmen pro Sekunde ankommen, wäre das Schiebregister 9 für 32 Bit auszulegen. Die auf Leitung 7 ankommenden Daten liegen in diesem Fall als synchrones RDI-Protokoll vor. Da das DAB-Ensemble eine geringere Datenrate als das RDI-Interface hat, werden im RDI-Datenstrom sogenannte Leerrahmen, auch als Padding-Frames oder Nullrahemn bezeichnet, eingefügt. Hierzu wird der RDI-Datenstrom zunächst in ein Schieberegister 9 geladen. Mit dem 22. Bit jedes halben RDI-Rahmens beginnt das 4-Bit lange Frame-Type-Word, welches bei Padding-Frames aus einer Sequenz von vier Nullen besteht. Diese 4 Bit, die bei Padding-Frames aus einer Sequenz von vier Nullen bestehen, werden durch Logikleitungen abgegriffen und einem Logikbaustein zugeführt. Erkennt der Logikbaustein das Vorliegen von vier Nullen, so wird auf Leitung 19 ein Padding-Erkennungssignal 19 an die FIFO-Steuerung 16 ausgegeben. Padding-Frames werden über die Leitung 10 nur dann in den Dual-Port-FIFO-Speicher 11 geladen, wenn der Füllstand des Dual-Port-FIFO-Speichers 11 weniger als 32 Bit beträgt, damit der Speicher 11 nicht leer laufen kann. Datenrahmen, die durch die Padding-Erkennung 8 nicht als Padding-Frames erkannt wurden, werden in jedem Fall in den Dual-Port-FIFO-Speicher 11 geladen. Der Synchronisationseinrichtung 15 wird sowohl ein Synchronisationssignal des ersten Rahmens, beispielsweise ein RDI-Rahmen-Synchronisationssignal 13 zugeführt, wie auch ein Synchronisationssignal für die zweiten Rahmen des Multimediabusses, die beispielsweise ein MOST-Rahmen-Synchronisationssignal 14 sind. Die Synchronisationseinrichtung 15 gibt zwei Ausgangssignale 17, 18 aus, wobei das Ausgangssignal 17 das Startsignal des ersten Rahmens, beispielsweise des RDI-Rahmens ist und das Ausgangssignal 18 ein Startsignal des zweiten Rahmens, beispielsweise ein MOST-Rahmen-Startsignal ist. Diese beiden Rahmenstartsignale 17, 18 werden der FIFO-Speicher-Steuerung 16 zugeführt, die das Auffüllen des Dual-Port-FIFO-Speichers 11 über die Leitung 10, mit den im Schieberegister 9 gespeicherten Daten steuert, sowie das Auslesen der im Dual-Port-FIFO-Speicher 11 zwischengespeicherten Daten und deren Ausgabe auf die Verteileinrichtung 3, die beispielsweise ein Multimediabus ist, der über die Ausgangsleitung 12, Daten mit der zweiten Rahmengeschwindigkeit ausgibt. Diese Daten können beispielsweise Daten mit der MOST-Datenrate von 44100 Rahmen pro Sekunde sein. Hierbei ist sicherzustellen, dass nur komplette Rahmen in den Speicher 11 geschrieben werden, damit eine Synchronisation mit dem Rahmen-Synchronisationssignal 14 des Multimediabusses 3 möglich ist. Bei der Ausgabe der zweiten Rahmen aus dem FIFO-Speicher 11 werden die zweiten Rahmen synchron zu dem Rahmensynchronisationssignal 14 des Verteilmittels ausgegeben.

## Patentansprüche

1. Vorrichtung zur Verteilung codierter und/oder komprimierter, digitaler Audio- und Datensignale (7) an mehrere Endgeräte (4,5) in einem Kraftfahrzeug, wobei Empfangsmittel (1,2) vorgesehen sind, mit denen die codierten Signale (7) in ersten Rahmen, mit einer ersten Rahmengeschwindigkeit empfangen werden, dass Mittel zur Anpassung (2,8,15,16) an eine zweite Rahmengeschwindigkeit vorgesehen sind, die ein Schieberegister (9) aufweisen, in das die Daten des ersten Rahmens eingeschrieben werden, dass ein FIFO-Speicher (11) vorgesehen ist, in den ein Teil der Daten aus dem Schieberegister (9) eingeschrieben werden und dass taktgleich mit dem Takt des Verteil mittels (3) der Inhalt des FIFO-Speichers (11) in die zweiten Rahmen übernommen wird und auf das Verteilmittel (3) ausgegeben wird, dass ein Multimediabus (3) vorgesehen ist, der eine Ringtopologie aufweist (3), mittels dem die codierten und/oder komprimierten Audiodaten (12) in zweiten Rahmen, mit einer zweiten Rahmengeschwindigkeit an die Endgeräte (4,5) verteilt werden und die Endgeräte (4) Mittel zur Decodierung (20) der Audio- und Datensignale aufweisen, **dass** die Mittel zur Decodierung (20) für die Audiosignale DAB-Quellendecoder und für die Datensignale Datendekoder sind und die codierten, digitalen Signale ein DAB-Ensemble sind, die mittels eines digitalen Rundfunksystems übertragen wurden, wobei die Nullrahmen, die in das Schieberegister (9) geladen wurden, nicht in den FIFO-Speicher (11) übernommen werden und damit auch nicht über den Multimediabus verteilt werden und dass jedes Endgerät (4) die Mittel zur Decodierung aufweist, so dass ein komplettes DAB-Ensemble empfangen wird und komplett auf den Verteilring (3) gegeben werden, so dass die Benutzer der Endgeräte (4) jeweils separat entscheiden können, welches Programm des übertragenen DAB-Ensembles sie momentan hören möchten bzw. welche Zusatzdaten zur Wiedergabe gebracht werden indem ein RDI-Datenstrom in ein Schieberegister (9) geladen wird, wobei ein 4-Bit langes Frame-Type-Word mit dem 22. Bit jedes halben RDI-Rahmens beginnt, welches bei Padding-Frames aus einer Sequenz von vier Nullen besteht und indem dieses 4-Bit lange Frame-Type-Word durch Logikleitungen abgegriffen wird und einem Logikbaustein zugeführt wird, und der Logikbaustein bei Erkennen des Vorliegens von vier Nullen auf einer Leitung (19) ein Padding-Erkennungssignal (19) an die FIFO-Steuerung (16) ausgibt und die Padding-Frames über eine weitere Leitung (10) nur dann in den FIFO-Speicher (11) geladen werden, wenn der Füllstand des FIFO-Speichers (11) weniger als 32 Bit beträgt, so dass der Speicher (11) nicht leer laufen kann und dass der Synchronisationseinrichtung (15) sowohl ein Synchronisationssignal des ersten Rahmens, das als ein RDI-Rahmen-Synchronisationssignal (13) ausgeführt ist, zugeführt wird und ein weiteres Synchronisationssignal für den zweiten Rahmen des Multimediabusses zugeführt wird und die Synchronisationseinrichtung (15) zwei Ausgangssignale (17, 18) ausgibt, wobei das erste Ausgangssignal (17) das Startsignal des ersten Rahmens, der ein RDI-Rahmen ist und das zweite Ausgangssignal (18) ein Startsignal des zweiten Rahmens, der ein MOST-Rahmen ist und diese beiden Ausgangssignale (17, 18) einer FIFO-Speicher-Steuerung (16) zugeführt werden, die das Auffüllen des FIFO-Speichers (11) mit den im Schieberegister (9) gespeicherten Daten, steuert.

2. Vorrichtung nach Anspruch 1, **dadurch gekennzeichnet, dass** die erste Rahmengeschwindigkeit größer ist als die zweite Rahmengeschwindigkeit.

3. Vorrichtung nach einem der vorherigen Ansprüche, **dadurch gekennzeichnet, dass** der Multimediabus ein optisches Übertragungssystem ist.

4. Vorrichtung nach einem der vorherigen Ansprüche, **dadurch gekennzeichnet, dass** die Mittel zur Decodierung (20) DAB-Quellendecoder und/oder Datendekoder sind.

## Claims

1. Apparatus for distributing encoded and/or compressed, digital audio and data signal (7) to a plurality of terminals (4, 5) in a motor vehicle, where reception means (1, 2) are provided which are used to receive the encoded signals (7) in first frames, at a first frame speed, where means for matching (2, 8, 15, 16) a second frame speed are provided which have a shift register (9) to which the data from the first frame are written, where an FIFO memory (11) is provided to which a portion of the data from the shift register (9) are written and where, in sync with the clock of the distribution means (3), the content of the FIFO memory (11) is transferred to the second frames and is output to the distribution means (3), where a multimedia bus (3) is provided which has a ring topology (3), said bus being used to distribute the encoded and/or compressed audio data (12) in second frames, at a second frame speed, to the terminals (4, 5), and the terminals (4) have means for decoding (20) the audio and data signals, where the means for decoding (20) are DAB source decoders for the audio signals and are data decoders for the data signals, and the encoded, digital signals are a DAB ensemble which have been transmitted using a digital broadcast radio system, where the zero frames which have been loaded into the shift register (9) are not transferred to the FIFO memory (11) and hence are also not distributed via the multimedia bus, and where each terminal (4) has the means for decoding, so that a full DAB ensemble is received and is passed entirely to the distribution ring (3), so that the users of the terminals (4) can each separately decide what program in the transmitted DAB ensemble they would currently like to listen to and what supplementary data are reproduced by virtue of an RDI datastream being loaded into a shift register (9), where a 4-bit frame type word starts at the 22nd bit of every half RDI frame, said word comprising a sequence of four zeros in the case of padding frames, and by virtue of this 4-bit frame type word being tapped off by logic lines and being supplied to a logic chip, and the logic chip outputting a padding recognition signal (19) to the FIFO controller (16) when the presence of four zeros on a line (19) is recognized, and the padding frames being loaded via a further line (10) into the FIFO memory (11) only if the filling level of the FIFO memory (11) is less than 32 bits, so that the memory (11) cannot empty and where the synchronization device (15) is supplied both with a synchronization signal for the first frame, which is in the form of an RDI frame synchronization signal (13), and with a further synchronization signal for the second frame of the multimedia bus, and the synchronization device (15) outputs two output signals (17, 18), where the first output signal (17) is the start signal for the first frame, which is an RDI frame, and the second output signal (18) is a start signal for the second frame, which is a MOST frame, and these two output signals (17, 18) are supplied to an FIFO memory controller (16) which controls the filling of the FIFO memory (11) with the data stored in the shift register (9).

2. Apparatus according to Claim 1, **characterized in that** the first frame speed is higher than the second frame speed.

3. Apparatus according to one of the preceding claims, **characterized in that** the multimedia bus is an optical transmission system.

4. Apparatus according to one of the preceding claims, **characterized in that** the means for decoding (20) are DAB source decoders and/or data decoders.

## Revendications

1. Dispositif de distribution de signaux audio et de signaux de données (7), numériques, codes et/ou comprimés vers plusieurs terminaux (4, 5) dans un véhicule automobile,
des moyens de réception (1, 2) étant prévus à l'aide desquels les signaux codés (7) sont reçus dans une première trame à une première vitesse de trame,
les moyens d'adaptation (2, 8, 15, 16) étant prévus pour une seconde vitesse de trame, ces moyens comportant un registre à décalage (9) dans lequel s'inscrivent les données de la première trame,
une mémoire FIFO (11) étant prévue dans laquelle est inscrite une partie des données du registre à décalage (9) et
en synchronisme avec la cadence du moyen de distribution (3), le contenu de la mémoire FIFO (11) est transféré dans la seconde trame et est émis vers le moyen de distribution (3),
un bus multimédia (3) étant prévu avec une topologie d'anneau (3) à l'aide duquel les données audio (12) codées et/ou comprimées dans la seconde trame sont distribuées avec une seconde vitesse de trame vers les terminaux (4, 5) et les terminaux (4) ont des moyens de décodage (20) des signaux audio et des signaux de données,
des moyens de décodage (20) pour les signaux audio étant des décodeurs de source DAB et ceux pour les signaux de données étant des décodeurs de données et les signaux numériques codés constituent un ensemble DAB transmis par un système de radio numérique,
selon lequel
les trames nulles qui ont été chargées dans le registre à décalage (9) ne sont pas transférées dans la mémoire FIFO (11) et n'ont pas à être distribuées par le bus multimédia et
chaque terminal (4) comporte des moyens de décodage de façon à recevoir un ensemble DAB complet et l'envoyer complet vers l'anneau de distribution (3) pour que les utilisateurs des terminaux (4) puissent décider chacun séparément du programme de l'ensemble DAB transmis qu'ils souhaitent écouter à l'instant ou quelles données supplémentaires doivent être reproduites en chargeant un flux de données RDI dans un registre à décalage (9),
un mot de type trame d'une longueur de 4 bits commençant par le 22^{ème} bit de chaque demi-trame RDI qui se compose de trames de remplissage formées d'une séquence de quatre zéros et en ce que ce mot de type trame, d'une longueur de 4 bits est détecté par des lignes logiques pour être appliqué à un composant logique et en reconnaissant l'existence de quatre zéros le composant logique émet, par la ligne (19), un signal de reconnaissance de remplissage (19) vers la commande FIFO (16) et les trames de remplissage ne sont chargées par une autre ligne (10) dans la mémoire FIFO (11) que si le niveau de remplissage de cette mémoire FI-FO 11 est inférieur à 32 bits de façon que la mémoire (11) ne puisse se vider et
l'installation de synchronisation (15) reçoit à la fois un signal de synchronisation de la première trame réalisé comme signal de synchronisation de trame RDI (13) et un autre signal de synchronisation pour les secondes trames du bus multimédia et l'installation de synchronisation émet deux signaux de sortie (17, 18),
le premier signal de sortie (17) étant le signal de départ de la première trame qui est une trame RDI et le second signal de sortie (18) est un signal de départ de la seconde trame qui est une trame MOST et ces deux signaux de sortie (17, 18) sont appliqués à une commande de mémoire FIFO (16) commandant le remplissage de la mémoire FIFO (11) avec les données enregistrées dans le registre à décalage (9).

2. Dispositif selon la revendication 1,
**caractérisé en ce que**
la première vitesse de trame est supérieure à la seconde vitesse de trame.

3. Dispositif selon l'une des revendications précédentes,
**caractérisé en ce que**
le bus multimédia est un système de transmission optique.

4. Dispositif selon l'une des revendications précédentes,
**caractérisé en ce que**
les moyens de décodage (20) sont des décodeurs de source DAB et/ou des décodeurs de données.
